# FASCICULE DE BREVET EUROPEEN

(11) **EP 1 826 988 B1**
(45) Date de publication et mention de la délivrance du brevet: **12.06.2013**
(21) Numéro de dépôt: 07300825.2
(22) Date de dépôt: 26.02.2007
(51) Int. Cl.: H04L 29/12, H04L 29/08

(54) **Evaluation de l'utilisation d'hyperlien de page multimédia dans un terminal**
Bewertung der Nutzung eines Multimediaseiten-Hyperlinks in einem Endgerät
Assessment of the use of a multimedia page hyperlink in a terminal

(30) Priorité: 28.02.2006 FR 0650686
(43) Date de publication de la demande: 29.08.2007
(73) Titulaire: FRANCE TELECOM, 75015 Paris (FR)
(72) Inventeur: Bosse, Patrick, 14210, ESQUAY NOTRE DAME (FR)
(74) Mandataire: Regimbeau

(56) Documents cités:
- GB-A- 2 359 644
- US-A- 6 052 730
- US-A1- 2002 128 925

## Description

La présente invention concerne une évaluation de l'utilisation d'hyperlien de page multimédia dans un terminal communiquant avec un serveur hôte à travers un réseau de télécommunications.

Dans un réseau de télécommunications de type internet, des équipements de réseau ont la faculté de tracer des requêtes HTTP ("HyperText Transfer Protocol" en anglais) émises par des terminaux d'usager et de reproduire un historique de parcours de pages Web, également appelées pages multimédias, visitées par des usagers. Cependant, l'origine des requêtes est inconnue desdits équipements de réseau et toutes les requêtes sont tracées, qu'elles proviennent d'événements relatif s aux usager s, tels qu'un clic sur un hyperlien de la page multimédia, ou d'événements relatifs aux navigateurs des terminaux, tels qu'une instanciation d'objets relatifs à la page multimédia à des fins d'affichage et de mise en page. L'historique de parcours contient sans distinction des adresses de localisation des pages multimédias demandées explicitement par les usagers et des adresses de localisation d'objets demandés implicitement par les navigateurs.

Par ailleurs, selon la demande de brevet EP 1622339, des équipements de réseau effectuent un marquage de requêtes HTTP émises explicitement par les usagers, cependant les équipements de réseau ne peuvent tracer des pages multimédias mémorisées dans des mémoires caches des navigateurs. L'accès à ces pages n'est pas connu des équipements de réseau puisqu'aucune requête relative à ces pages ne leur est transmise par le navigateur. Les équipements de réseau n'ont donc pas connaissance de toutes les pages multimédias explicitement demandées par les usagers.

La demande de brevet GB-A-2 359 644 décrit un procédé pour ajouter de nouvelles fonctions dans des pages Web. Un serveur de conversion de contenu intercepte des pages Web transmises depuis un serveur Web vers un client Web et modifie les pages Web interceptées en y ajoutant une nouvelle adresse URL qui pointe vers un serveur de traitement. Une ancienne adresse URL contenue dans un hyperlien initial de la page Web peut être remplacée par une nouvelle adresse URL qui pointe directement vers des nouvelles fonctions dans le serveur de traitement, ou bien une nouvelle adresse URL peut être ajoutée à la page Web dans un nouveau hyperlien contenant de nouvelles fonctions et pointer vers le serveur de traitement pour exécuter les fonctions de l'hyperlien. Le serveur de conversion de contenu transmet la page Web modifiée au client Web qui l'interprète et qui transmet une requête au serveur de traitement pour exécuter des fonctions de l'hyperlien. Lorsque le serveur de conversion de contenu modifie un hyperlien, c'est-à-dire remplace une ancienne adresse URL par une nouvelle adresse URL, l'activation de l'hyperlien modifié aboutit à la transmission d'une seule requête depuis le client Web au serveur de traitement.

Le serveur de traitement exécute une fonction de l'hyperlien activé en collaboration avec le client Web ou le serveur de conversion de contenu ou le serveur Web. Il constitue l'élément essentiel et central du procédé d'adjonction de nouvelles fonctions dans des pages Web. Un dysfonctionnement ou l'arrêt du serveur de traitement dans le procédé d'adjonction de nouvelles fonctions dans des pages Web engendre automatiquement une erreur puisque le serveur de traitement exécute une fonction de l'hyperlien activé.

Pour pallier aux inconvénients précités, un procédé de modification d'une page multimédia selon l'invention pour évaluer l'utilisation d'au moins un hyperlien dans ladite page multimédia dans un terminal, l'hyperlien contenant une adresse de localisation d'une autre page multimédia d'un serveur hôte, ledit terminal communiquant avec ledit serveur hôte à travers un réseau de télécommunications, procédé comprenant dans un premier moyen serveur :
- une modification d'au moins ledit hyperlien contenu dans une réponse transmise par le serveur hôte suite à une requête du terminal, l'hyperlien modifié contenant outre l'adresse de localisation de ladite autre page un élément permettant une transmission d'une requête spécifique incluant l'adresse de localisation de ladite autre page par le terminal à un deuxième moyen serveur,
- et une production d'une réponse modifiée contenant l'hyperlien modifié à transmettre audit terminal,
caractérisé en ce que l'hyperlien est adapté pour, suite à une activation dans le terminal, entraîner une transmission par le terminal de ladite requête spécifique au deuxième moyen serveur et une transmission d'une requête de ladite autre page par le terminal audit serveur hôte.

Selon l'invention, une activation d'hyperlien de page multimédia entraînant la transmission de la requête spécifique peut être suivie précisément dans au moins un terminal afin que le deuxième moyen serveur extraie des paramètres de la requête spécifique pour établir des statistiques sur les utilisations des hyperliens, sans aucune incidence sur la transmission de la requête de l'autre page multimédia par le terminal.

Selon une autre caractéristique de l'invention, ledit élément peut comporter des instructions codées relatives à l'hyperlien, les instructions commandant la transmission de la requête spécifique au deuxième moyen serveur.

Avantageusement, l'invention fournit une connaissance précise et exhaustive des hyperliens activés par des usagers et des pages multimédias explicitement demandées par les usagers. Par exemple, seuls certains hyperliens peuvent être modifiés, tels que des hyperliens relatifs à des images, afin d'établir dans le deuxième moyen serveur des statistiques en temps réel sur l'utilisation de ces hyperliens par un ensemble d'usagers et des historiques de pages multimédias incluant des hyperliens activés par l'usager du terminal et ainsi visitées par l'usager.

L'invention concerne également un procédé d'information de l'utilisation d'au moins un hyperlien dans une page multimédia dans un terminal, caractérisé en ce que le procédé d'information comprend :
une transmission d'une requête spécifique incluant une adresse de localisation d'une autre page multimédia d'un serveur hôte par le terminal à un moyen serveur en fonction d'un élément contenu dans un hyperlien suite à une activation dudit hyperlien dans le terminal, l'activation dudit hyperlien entraînant en outre une transmission d'une requête de l'autre page multimédia par le terminal audit serveur hôte en fonction de l'adresse de localisation contenue dans ledit hyperlien.

Selon l'invention, suite à l'activation de l'hyperlien modifié de la page multimédia affichée dans le terminal, une requête contenant l'adresse de localisation est transmise depuis le terminal au serveur hôte afin de recevoir une autre page multimédia qui est localisée par l'adresse de localisation. La modification des hyperliens est donc avantageusement transparente pour le serveur hôte qui reçoit des requêtes classiques.

L'invention concerne également un procédé d'évaluation de l'utilisation d'au moins un hyperlien dans une page multimédia dans un terminal, caractérisé en ce que le procédé d'information comprend dans un moyen serveur une réception d'une requête spécifique incluant une adresse de localisation d'une autre page multimédia d'un serveur hôte, ladite requête spécifique étant transmise par le terminal en fonction d'un élément contenu dans un hyperlien dont l'activation entraîne en outre la transmission d'une requête de l'autre page multimédia par ledit terminal audit serveur hôte.

Selon une autre caractéristique de l'invention, au moins une partie de la requête spécifique comprenant l'adresse de localisation relative à l'hyperlien, ou toute la requête spécifique, peut être mémorisée dans des moyens de stockage, tels qu'une base de données, en relation avec le deuxième moyen serveur, de préférence en correspondance avec un identificateur du terminal qui peut être extrait de la requête spécifique.

Par conséquent, le procédé selon l'invention peut fournir un historique de parcours complet, contenant l'adresse de toutes les pages multimédias demandées par l'usager du terminal, qu'elles soient mémorisées ou non dans le cache du navigateur. L'historique de parcours est alors exempt de toute trace concernant des objets liés à des pages multimédias visitées et implicitement demandés par le navigateur du terminal.

L'invention concerne également un serveur apte à modifier une page multimédia pour évaluer l'utilisation d'au moins un hyperlien dans ladite page multimédia dans un terminal, ledit serveur comprenant :
- un moyen pour modifier au moins un hyperlien d'une page multimédia contenue dans une réponse transmise par un serveur hôte suite à une requête du terminal, ledit hyperlien contenant une adresse de localisation d'une autre page multimédia du serveur hôte, l'hyperlien modifié contenant outre l'adresse de localisation de ladite autre page un élément permettant une transmission d'une requête spécifique incluant l'adresse de localisation de ladite autre page par le terminal à un deuxième serveur et
- un moyen pour produire une réponse modifiée contenant l'hyperlien modifié à transmettre audit terminal,
caractérisé en ce que l'hyperlien modifié est adapté pour, suite à une activation dudit hyperlien dans le terminal, entraîner une transmission de ladite requête spécifique au deuxième moyen serveur et une transmission d'une requête de ladite autre page par le terminal audit serveur hôte.

L'invention concerne encore un terminal apte à informer de l'utilisation d'au moins un hyperlien dans une page multimédia dans ledit terminal, caractérisé en ce qu'il comprend un moyen pour transmettre une requête spécifique incluant une adresse de localisation d'une autre page multimédia d'un serveur hôte à un moyen serveur en fonction d'un élément contenu dans un hyperlien suite à une activation dudit hyperlien dans le terminal, l'activation dudit hyperlien entraînant en outre une transmission d'une requête de l'autre page multimédia par le terminal audit serveur hôte en fonction de l'adresse de localisation contenue dans ledit hyperlien.

L'invention concerne encore un serveur apte à évaluer l'utilisation d'au moins un hyperlien dans une page multimédia dans un terminal, caractérisé en ce qu'il comprend un moyen pour recevoir une requête spécifique incluant une adresse de localisation d'une autre page multimédia d'un serveur hôte, ladite requête spécifique étant transmise par le terminal en fonction d'un élément contenu dans un hyperlien dont l'activation entraîne en outre la transmission d'une requête de l'autre page multimédia par ledit terminal audit serveur hôte.

Enfin, l'invention se rapporte à des programmes d'ordinateur apte à être mis en oeuvre respectivement dans un premier serveur, un deuxième serveur et un terminal pour évaluer l'utilisation d'hyperlien de page multimédia dans le terminal communiquant avec un serveur hôte à travers un réseau de télécommunications, les programmes comportant des instructions pour la mise en oeuvre d'un procédé selon l'invention lorsque lesdites instructions sont mises en oeuvre par des processeurs.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de télécommunications pour évaluer l'utilisation d'hyperliens selon l'invention ; et
- la figure 2 est un algorithme du procédé de télécommunications pour évaluer l'utilisation d'hyperliens selon l'invention.

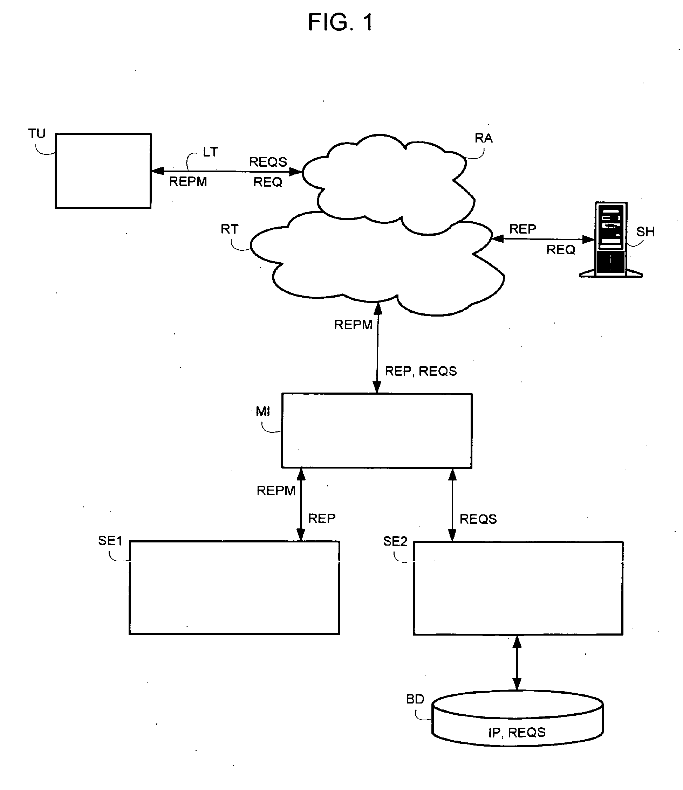

Selon une réa lisation préférée de l'invention montrée à la figure 1, le système de télécommunications comprend un terminal d'usager TU, un serveur hôte SH, un module d'interception MI, un premier serveur SE1 et un deuxième serveur SE2 en relation avec une base de données BD.

Le terminal d'usager TU communique avec le serveur hôte SH à travers un réseau de télécommunications RT et un réseau d'accès RA par une liaison LT.

Le terminal d'usager TU est par exemple un ordinateur personnel relié directement par modem à la liaison LT de type xDSL ("Digital Subscriber Line" en anglais) ou RNIS (Réseau Numérique à Intégration de Services) reliée au réseau d'accès RA correspondant.

Selon un autre exemple, le terminal d'usager TU est un terminal de radiocommunications mobile, la liaison LT est un canal de radiocommunications, et le réseau d'accès RA comprend le réseau fixe d'un réseau de radiocommunications cellulaire, par exemple de type GSM ("Global System for Mobile communications" en anglais) avec un service GPRS ("Général Packet Radio Service" en anglais), ou de type UMTS ("Universal Mobile Télécommunications System" en anglais) .

Selon d'autres exemples, le terminal d'usager TU comprend un dispositif ou objet électronique de télécommunications qui est personnel à l'usager et qui peut être un assistant numérique personnel communicant PDA, ou un téléphone intelligent (SmartPhone). Plus généralement, le terminal TU peut être tout autre terminal domestique communicant portable ou non tel qu'une console de jeux vidéo, ou un récepteur de télévision intelligent coopérant avec une télécommande à afficheur, ou un clavier alphanumérique servant également de souris à travers une liaison infrarouge.

Les terminaux d'usager et les réseaux d'accès correspondant ne sont pas limités aux exemples ci-dessus et peuvent être constitués par d'autres terminaux et réseaux d'accès connus.

Le système présente classiquement une architecture du type client-serveur entre le terminal d'usager TU et le serveur hôte SH communiquant entre eux à travers le réseau de télécommunications RT via le module d'interception MI. Le serveur hôte SH contient physiquement des fichiers dont au moins un inclut des balises HTML ("HyperText Markup Language" en anglais).

Le terminal d'usager TU est équipé d'une ressource spécifique, connue sous le nom de navigateur ("Browser" en anglais), qui est un logiciel client capable d'interroger des serveurs tels que le serveur hôte SH, d'exploiter leurs résultats et de mettre en page notamment des informations relatives à des parties de code HTML dans des fichiers transmis par les serveurs.

En particulier, les fichiers transmis par les serveurs contenant des parties de code HTML sont appelés pages multimédias dans la suite de la description, sur lesquelles l'usager du terminal peut agir, par exemple en cliquant sur des menus déroulants ou en tapant du texte dans une zone de saisie.

Une page multimédia peut contenir des zones actives représentées par exemple par un caractère, un groupe de caractères, une image ou encore une partie d'image. Chaque zone active est associée à un hyperlien qui est défini par des parties de code HTML entre des balises HTML et qui commande l'obtention d'une autre page multimédia lorsqu'il est activé, par exemple en cliquant sur la zone active à l'écran du terminal.

Dans la suite de la description, on se réfèrera en tant que protocole de transport requête-réponse au protocole HTTP ("HyperText Transfer Protocol" en anglais). Le module d'interception MI est apte à recevoir des messages de requête HTTP transmis par le terminal TU et à les transmettre au serveur hôte SH, ainsi qu'à recevoir des messages de réponse HTTP du serveur hôte et à les transmettre au terminal. Pour une connexion avec un terminal mobile, le protocole utilisé entre le serveur hôte SH et le module d'interception MI est encore le protocole HTTP, bien que le terminal mobile connecté au réseau RT à travers un proxy communique avec le proxy selon un protocole différent, par exemple le protocole WAP ("Wireless Application Protocol" en anglais). Le module d'interception MI joue le rôle de proxy WAP et transforme des messages de requête transmis par le terminal de radiocommunications cellulaire ou des messages de réponse à transmettre au terminal mobile selon un autre protocole, par exemple le protocole WAP.

Le protocole HTTP est un protocole de niveau applicatif suffisamment léger et rapide pour la transmission de documents distribués et multimédias à travers un système d'information multi-usager. Dans la suite de la description, un message est une unité de données protocolaire d'une communication HTTP consistant en une séquence structurée d'octets. Le protocole HTTP est basé sur un paradigme requête/réponse. Une requête REQ est un message de requête HTTP et une réponse REP est un message de réponse HTTP. Des fichiers contenus dans le serveur hôte sont référencés par une adresse de localisation URL ("Uniform Resource Locator" en anglais). La requête REQ contient notamment l'adresse URL d'un fichier demandé par le terminal d'usager TU ainsi qu'une adresse IP ("Internet Protocol" en anglais) du terminal TU.

Lorsque le terminal TU établit une connexion vers le serveur hôte SH, le terminal lui envoie une requête REQ comportant une ligne de début ("start line" en anglais), des champs d'en-tête et éventuellement un corps de message. La ligne de début peut inclure une opération désignée par une méthode, une adresse URL et un numéro de version du protocole HTTP. Les champs d'en-tête peuvent inclure des modificateurs de la requête, des informations sur le terminal, et un type de format de la ressource acceptable dans le serveur comme un type MIME ("Multipurpose Internet Mail Extension" en anglais) désignant une ressource textuelle, d'image, audio ou vidéo.

Le module d'interception MI est un proxy communiquant avec les premier et deuxième serveurs SE1 et SE2 qui sont similaires au moins partiellement à des serveurs à protocole d'adaptation de contenu internet ICAP ("Internet Content Adaptation Protocol"). Un serveur ICAP transforme et adapte une requête REQ ou une réponse REP, selon des transformations et adaptations prédéterminées pour produire une autre requête ou réponse. Par exemple, les transformations et adaptations sont une traduction du contenu d'une réponse, une insertion de publicité, un filtrage, une compression, etc.

Les serveurs SE1 et SE2 sont équipés chacun d'un processeur exécutant des instructions de programme par exemple pour la mise en oeuvre d'étapes du procédé selon l'invention. Les serveurs SE1 et SE2 peuvent communiquer entre eux à travers le réseau de télécommunications RT du type internet. Dans une variante, les serveurs communiquent entre eux par un réseau local ou par des lignes spécialisées. Dans une autre variante, les serveurs sont confondus en ou intégrés dans un unique serveur qui est en relation avec la base de données BD ; par exemple l'unique serveur inclut la base de données BD.

La base de données BD est liée au deuxième serveur SE2 et comprend notamment des informations nécessaires à la réalisation de l'invention telles que des adresses URL et des identificateurs de terminaux d'usager.

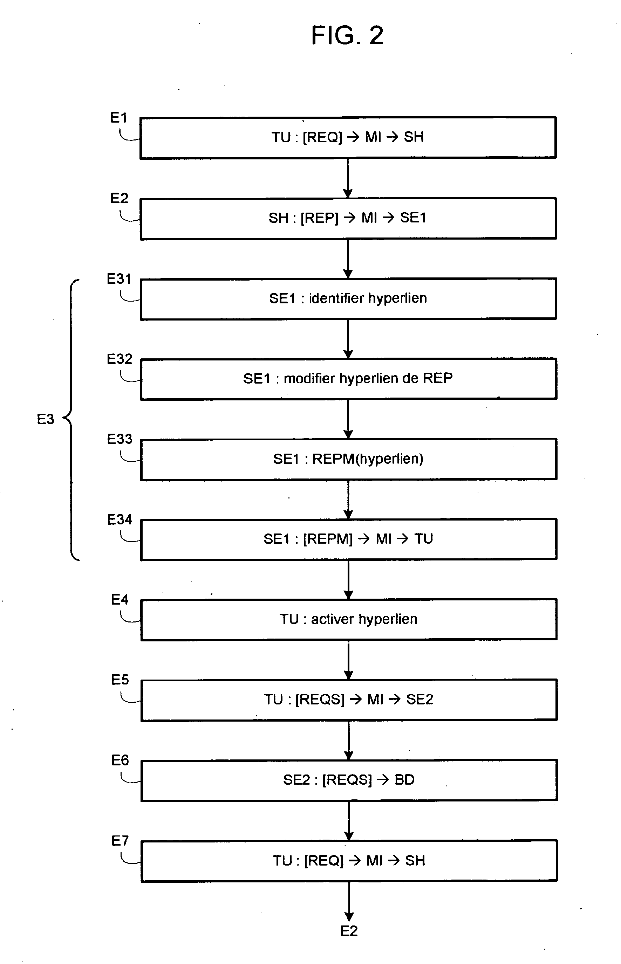

En référence à la figure 2, le procédé d'évaluation de l'utilisation d'hyperliens de page multimédia comprend des étapes E1 à E7 exécutées dans le système de télécommunications selon l'invention.

A l'étape E1, le terminal d'usager TU établit une connexion avec le serveur hôte SH afin d'afficher des pages multimédias fournies par le serveur hôte SH. Le navigateur du terminal d'usager TU est configuré pour se connecter au module d'interception MI et lui transmettre une requête REQ pour obtenir une page multimédia. Le module d'interception MI se connecte au serveur hôte SH avec lequel le navigateur souhaite dialoguer et lui transmet la requête REQ. La requête REQ contient des champs relatifs notamment à une méthode d'accès, une adresse de localisation URL, une version de protocole et des en-têtes de requête HTTP permettant au serveur hôte d'identifier un fichier, tel que la page multimédia, désigné par l'adresse URL et d'identifier l'adresse IP du terminal d'usager TU.

A l'étape E2, le serveur hôte SH traite la requête reçue REQ en analysant tous les champs de celle-ci afin de formuler une réponse REP contenant le fichier identifié, c'est-à-dire la page multimédia. Le serveur hôte SH transmet alors la réponse REP au module d'interception MI qui la transmet au premier serveur SE1.

La page multimédia contenue dans la réponse REP reçue par le premier serveur SE1 contient des balises HTML et au moins un hyperlien initial et est de préférence une page HTML. La page multimédia peut être en outre écrite en d'autres langages tels que le langage PHP ("PHP Hypertext Preprocessor" en anglais où PHP est l'acronyme récursif de "Personal Home Page"). La page multimédia peut comprendre une pluralité d'objets prévus pour satisfaire à des besoins d'affichage et de mise en page et qui découlent d'une interprétation de parties de code HTML de la page multimédia. En effet, dans les parties de code HTML de la page multimédia demandée par l'usager se trouvent des références à des objets qui permettent de constituer la page à afficher par le navigateur. Ces objets peuvent être des images, des logos ou encore des feuilles de style.

A l'étape E3, le premier serveur SE1 produit une réponse modifiée REPM destinée au terminal d'usager TU à partir de la réponse REP transmise par le module d'interception MI. L'étape E3 comprend des étapes E31 à E34.

A l'étape E31, le premier serveur SE1 analyse la réponse REP, en extrait la page multimédia et identifie le ou les hyperliens initiaux contenus dans celle-ci, par exemple par une recherche classique de chaînes de caractères.

A l'étape E32, le premier serveur SE1 modifie au moins un hyperlien initial identifié contenu dans la page multimédia en un hyperlien modifié.

Chaque hyperlien initial identifié est modifié en insérant des instructions codées dans les balises HTML relatives à l'hyperlien. Les instructions codées sont écrites en code client, c'est-à-dire en un code exécutable par le navigateur du terminal d'usager, tel que Javascript de Netscape (marque déposée) de préférence, Jscript ou encore VBscript (Visual Basic Scripting Edition) de Microsoft (marque déposée).

A l'étape E33, le premier serveur SE1 produit une réponse modifiée REPM contenant la page multimédia avec au moins l'hyperlien modifié.

A l'étape E34, le premier serveur SE1 transmet la réponse modifiée REPM au module d'interception MI qui la transmet au terminal d'usager TU.

Le navigateur du terminal d'usager traite alors la réponse modifiée REPM pour mettre en page et afficher tous les objets relatifs à la page multimédia.

Le navigateur dispose d'une modélisation objet de document DOM ("Document Object Modeling" en anglais) définissant une arborescence d'objets relatifs à la page multimédia, tels que des images et des hyperliens. L'instanciation d'un objet peut mettre à disposition un autre objet fourni par le système d'exploitation sur lequel le navigateur est exécuté.

A l'étape E4, un hyperlien modifié de la page multimédia est activé par l'usager par exemple en cliquant sur une image d'une zone active associée à l'hyperlien et incluse dans la page multimédia.

L'exécution des instructions codées insérées instancie un objet de l'arborescence du navigateur, par exemple du type ActiveX, qui peut émettre immédiatement une requête HTTP avec une adresse de localisation URL spécifique contenant en paramètre une adresse de localisation initiale URL , lesquelles adresses sont définies ci-après.

Un hyperlien initial identifié à l'étape E31 est par exemple de la forme suivante:
<a href=http://www.monsite.fr/>Lien sur Monsite</a>.

La balise <a> spécifie un attribut "href" dont la valeur précise l'adresse de localisation URL d'une autre page multimédia hébergée par le serveur hôte SH (Monsite) à obtenir suite à l'activation de l'hyperlien initial.

L'hyperlien modifié à l'étape E32 correspondant à l'hyperlien initial identifié à l'étape E31 est par exemple de la forme suivante:
<a href="javascript:HttpRequest=new ActiveXObject ('Msxml2.XMLHTTP');
HttpRequest.open.('GET','http://ServiceICAP?Link=http: //www.monsite.fr/', true);
HttpRequest.send(null);
self.location='http://www.monsite.fr/"'>
Lien modifié sur Monsite</a>.

L'adresse de localisation URL spécifique définie par "http://ServiceICAP" est mise en argument d'une méthode "HttpRequest.open".

Les instructions codées insérées dans les balises HTML relatives à l'hyperlien commandent la transmission d'une requête spécifique au deuxième serveur SE2 à l'adresse de localisation spécifique, identifié par "ServiceICAP" dans l'exemple précédant. L'adresse de localisation initiale relative à l'hyperlien initial, "http://www.monsite.fr" selon l'exemple, est incluse en paramètre de l'adresse de localisation spécifique au moyen de l'opérateur "Link".

A l'étape E5, le navigateur du terminal d'usager initialise une requête HTTP spécifique REQS à transmettre au deuxième serveur SE2, la requête REQS correspondant à l'objet instancié à l'étape E4 et incluant en paramètre l'adresse de localisation initiale relative à l'hyperlien activé. La requête HTTP spécifique est par exemple de la forme suivante:
GET http://ServiceICAP/?Link=http://www.monsite.fr/ HTTP/1.1
Accept: */*
Accept-Language: fr
Accept-Encoding: gzip, deflate
User-Agent: Mozilla/4.0 (compatible; MSIE 6.0; Windows NT 5.1; SV1; CB 1.0.5)
Host: ServiceICAP
Connection: Keep-Alive

Le terminal d'usager TU transmet alors la requête spécifique REQS au module d'interception MI qui la transmet au deuxième serveur SE2.

A l'étape E6, le deuxième serveur SE2 traite la requête spécifique reçue REQS et en extrait l'adresse de localisation initiale mise en paramètre.

Selon un premier exemple d'évaluation d'utilisation d'hyperlien de page multimédia, le deuxième serveur SE2 détermine des statistiques en temps réel sur différentes pages multimédias fournies par le serveur hôte SH et explicitement demandées par des terminaux d'usager, afin d'étudier des stratégies d'exploitation du serveur hôte.

Selon un deuxième exemple d'évaluation d'utilisation d'hyperlien de page multimédia, le deuxième serveur SE2 mémorise des adresses de localisation initiales transmises par différents terminaux d'usager dans la base de données BD afin d'établir des historiques de demandes explicites de pages multimédias.

En variante, la requête spécifique REQS transmise à l'étape E5 contient en outre un identificateur du terminal d'usager, tel qu'une l'adresse IP. Le deuxième serveur SE2 reçoit alors la requête spécifique REQS à l'étape E6 et en extrait également l'identificateur de terminal d'usager qu'il mémorise dans la base de données BD en correspondance avec l'adresse de localisation initiale. L'identificateur du terminal d'usager est par exemple utile pour un service de profilage.

A l'étape E7, le terminal d'usager TU transmet une requête REQ relative à l'hyperlien initial et contenant l'adresse de localisation initiale au serveur hôte afin de recevoir une autre page multimédia localisée par l'adresse de localisation initiale. Le procédé se poursuit alors par l'étape E2.

Après la transmission de la requête spécifique REQS, le navigateur peut ignorer une éventuelle réponse du deuxième serveur et commander la transmission de la requête REQ, par exemple après l'expiration d'un délai prédéterminé. L'étape E7, succédant à l'étape E5, peut être exécutée avant ou après l'étape E6, ou en même temps que l'étape E6.

Dans une variante, les fonctionnalités du premier serveur SE1 sont incluses dans le terminal d'usager TU. Le premier serveur SE1 n'intervient pas dans le procédé et est considéré comme confondu avec le terminal d'usager. La réponse REP du serveur hôte est directement transmise au terminal d'usager qui identifie et modifie le ou les hyperliens initiaux contenus dans la page multimédia incluse dans la réponse. Le terminal d'usager affiche alors la page multimédia contenant les hyperliens modifiés.

L'invention décrite ici concerne un procédé et un système pour évaluer l'utilisation d'hyperlien de page multimédia dans un terminal communiquant avec un serveur hôte à travers un réseau de télécommunications. Selon une implémentation préférée, les étapes du procédé de l'invention sont déterminées par les instructions de programmes d'ordinateur incorporés respectivement dans un premier serveur, dans un deuxième serveur et dans un terminal. Les programmes comportent des instructions de programme qui, lorsque lesdits programmes sont exécutés dans des processeurs respectivement du premier serveur, du deuxième serveur et du terminal dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement d'informations peut être n'importe quelle entité ou dispositif capable de stocker le programme. Par exemple, le support peut comporter un moyen de stockage ou support d'enregistrement sur lequel est stocké le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement d'informations peut être un circuit intégré dans lequel le programme est incorporé, le circuit étant adapté pour exécuter ou pour être utilisé dans l'exécution du procédé selon l'invention.

## Revendications

1. Procédé de modification d'une page multimédia pour évaluer l'utilisation d'au moins un hyperlien dans ladite page multimédia dans un terminal (TU), l'hyperlien contenant une adresse de localisation d'une autre page multimédia d'un serveur hôte (SH), ledit terminal communiquant avec ledit serveur hôte à travers un réseau de télécommunications (RT), le procédé comprenant dans un premier moyen serveur (SE1) :
- une modification (E32) d'au moins ledit hyperlien contenu dans une réponse (REP) transmise par le serveur hôte suite à une requête (REQ) du terminal, l'hyperlien modifié contenant outre l'adresse de localisation de ladite autre page un élément permettant une transmission (E5) d'une requête spécifique (REQS) incluant l'adresse de localisation de ladite autre page par le terminal à un deuxième moyen serveur (SE2),
- et une production (E33) d'une réponse modifiée (REPM) contenant l'hyperlien modifié à transmettre (E34) audit terminal,
**caractérisé en ce que** l'hyperlien modifié est adapté pour, suite à une activation dans le terminal, entraîner une transmission (E5) par le terminal de ladite requête spécifique au deuxième moyen serveur (SE2) et une transmission (E7) par le terminal d'une requête de ladite autre page audit serveur hôte.

2. Procédé selon la revendication 1, **caractérisé en ce que** ledit élément comporte des instructions codées relatives à l'hyperlien, les instructions commandant la transmission (E5) de la requête spécifique (REQS) au deuxième moyen serveur (SE2).

3. Procédé d'information de l'utilisation d'au moins un hyperlien dans une page multimédia dans un terminal (TU), **caractérisé en ce que** le procédé d'information comprend :
une transmission (E5) d'une requête spécifique (REQS) incluant une adresse de localisation d'une autre page multimédia d'un serveur hôte (SH) par le terminal à un moyen serveur (SE2) en fonction d'un élément contenu dans un hyperlien suite à une activation dudit hyperlien dans le terminal, l'activation dudit hyperlien entraînant en outre une transmission d'une requête (REQ) de l'autre page multimédia par le terminal audit serveur hôte en fonction de l'adresse de localisation contenue dans ledit hyperlien.

4. Serveur (SE1) apte à modifier une page multimédia pour évaluer l'utilisation d'au moins un hyperlien dans ladite page multimédia dans un terminal (TU), ledit serveur comprenant :
- un moyen pour modifier au moins un hyperlien d'une page multimédia contenue dans une réponse (REP) transmise par un serveur hôte suite à une requête (REQ) du terminal, ledit hyperlien contenant une adresse de localisation d'une autre page multimédia du serveur hôte (SH), l'hyperlien modifié contenant outre l'adresse de localisation de ladite autre page un élément permettant une transmission (E5) d'une requête spécifique (REQS) incluant l'adresse de localisation de ladite autre page par le terminal à un deuxième serveur (SE2), et
- un moyen pour produire une réponse modifiée (REPM) contenant l'hyperlien modifié à transmettre audit terminal,
**caractérisé en ce que** l'hyperlien modifié est adapté pour, suite à une activation dudit hyperlien dans le terminal (TU), entraîner une transmission (E5) par le terminal de ladite requête spécifique au deuxième moyen serveur (SE2) et une transmission (E7) par le terminal d'une requête de ladite autre page audit serveur hôte.

5. Terminal (TU) apte à informer de l'utilisation d'au moins un hyperlien dans une page multimédia dans ledit terminal (TU), **caractérisé en ce qu'**il comprend un moyen pour transmettre une requête spécifique (REQS) incluant une adresse de localisation d'une autre page multimédia d'un serveur hôte (SH) à un moyen serveur (SE2) en fonction d'un élément contenu dans un hyperlien suite à une activation dudit hyperlien dans le terminal, l'activation dudit hyperlien entraînant en outre une transmission d'une requête (REQ) de l'autre page multimédia par le terminal audit serveur hôte en fonction de l'adresse de localisation contenue dans ledit hyperlien.

6. Programme d'ordinateur apte à être mis en oeuvre dans un serveur (SE1) pour une modification d'une page multimédia pour évaluer l'utilisation d'au moins un hyperlien dans ladite page multimédia dans un terminal (TU), l'hyperlien contenant une adresse de localisation d'une autre page multimédia d'un serveur hôte (SH), ledit terminal communiquant avec ledit serveur hôte à travers un réseau de télécommunications (RT), ledit programme comprenant des instructions qui, lorsque le programme est exécuté dans ledit serveur, réalisent les étapes suivantes :
une modification (E32) d'au moins ledit hyperlien contenu dans une réponse (REP) transmise par le serveur hôte suite à une requête (REQ) du terminal, l'hyperlien modifié contenant outre l'adresse de localisation de ladite autre page un élément permettant une transmission (E5) d'une requête spécifique (REQS) incluant l'adresse de localisation de ladite autre page par le terminal à un deuxième moyen serveur (SE2), et
une production (E33) d'une réponse modifiée (REPM) contenant l'hyperlien modifié à transmettre (E34) audit terminal,
**caractérisé en ce que** l'hyperlien modifié est adapté pour, suite à une activation dudit hyperlien dans le terminal, entraîner une transmission (E5) par le terminal de ladite requête spécifique au deuxième moyen serveur (SE2) et une transmission (E7) par le terminal d'une requête de ladite autre page audit serveur hôte.

7. Programme d'ordinateur apte à être mis en oeuvre dans un terminal (TU) pour une information de l'utilisation d'au moins un hyperlien dans une page multimédia dans un terminal (TU), ledit programme étant **caractérisé en ce qu'**il comprend des instructions qui, lorsque le programme est exécuté dans ledit terminal, réalisent une transmission (E5) d'une requête spécifique (REQS) incluant une adresse de localisation d'une autre page multimédia d'un serveur hôte (SH) par le terminal à un moyen serveur (SE2) en fonction d'un élément contenu dans un hyperlien suite à une activation dudit hyperlien dans le terminal, l'activation dudit hyperlien entraînant en outre une transmission d'une requête (REQ) de l'autre page multimédia par le terminal audit serveur hôte en fonction de l'adresse de localisation contenue dans ledit hyperlien.

## Patentansprüche

1. Verfahren zur Änderung einer Multimediaseite, um die Verwendung mindestens eines Hyperlinks auf der Multimediaseite in einem Endgerät (TU) zu bewerten, wobei der Hyperlink eine Lokalisierungsadresse einer anderen Multimediaseite eines Host-Servers (SH) enthält, wobei das Endgerät mit dem Host-Server über ein Telekommunikationsnetz (RT) in Verbindung steht, wobei das Verfahren in einer ersten Servereinrichtung (SE1) enthält:
- eine Änderung (E32) mindestens des in einer vom Host-Server nach einer Anforderung (REQ) des Endgeräts übertragenen Antwort (REP) enthaltenen Hyperlinks, wobei der geänderte Hyperlink außer der Lokalisierungsadresse der anderen Seite ein Element enthält, das eine Übertragung (E5) einer die Lokalisierungsadresse der anderen Seite enthaltenden spezifischen Anforderung (REQS) durch das Endgerät an eine zweite Servereinrichtung (SE2) ermöglicht,
- und eine Erzeugung (E33) einer geänderten Antwort (REPM), die den an das Endgerät zu übertragenden (E34) Hyperlink enthält,
**dadurch gekennzeichnet, dass** der geänderte Hyperlink geeignet ist, um nach einer Aktivierung im Endgerät eine Übertragung (E5) durch das Endgerät der spezifischen Anforderung an die zweite Servereinrichtung (SE2) und eine Übertragung (E7) durch das Endgerät einer Anforderung der anderen Seite an den Host-Server herbeizuführen.

2. Verfahren nach Anspruch 1, **dadurch gekennzeichnet, dass** das Element codierte Anweisungen bezüglich des Hyperlinks aufweist, wobei die Anweisungen die Übertragung (E5) der spezifischen Anforderung (REQS) an die zweite Servereinrichtung (SE2) steuern.

3. Verfahren zur Information über die Verwendung mindestens eines Hyperlinks in einer Multimediaseite in einem Endgerät (TU), **dadurch gekennzeichnet, dass** das Informationsverfahren enthält:
eine Übertragung (E5) einer spezifischen Anforderung (REQS), die eine Lokalisierungsadresse einer anderen Multimediaseite eines Host-Servers (SH) enthält, durch das Endgerät an eine Servereinrichtung (SE2) abhängig von einem in einem Hyperlink enthaltenen Element nach einer Aktivierung des Hyperlinks im Endgerät, wobei die Aktivierung des Hyperlinks außerdem eine Übertragung einer Anforderung (REQ) der anderen Multimediaseite durch das Endgerät an den Host-Server abhängig von der im Hyperlink enthaltenen Lokalisierungsadresse herbeiführt.

4. Server (SE1), der eine Multimediaseite ändern kann, um die Verwendung mindestens eines Hyperlinks auf der Multimediaseite in einem Endgerät (TU) zu bewerten, wobei der Server enthält:
- eine Einrichtung, um mindestens ein Hyperlink einer Multimediaseite zu ändern, die in einer von einem Host-Server nach einer Anforderung (REQ) des Endgeräts übertragenen Antwort (REP) enthalten ist, wobei der Hyperlink eine Lokalisierungsadresse einer anderen Multimediaseite des Host-Servers (SH) enthält, wobei der geänderte Hyperlink außer der Lokalisierungsadresse der anderen Seite ein Element enthält, das eine Übertragung (E5) einer die Lokalisierungsadresse der anderen Seite enthaltenden spezifische Anforderung (REQS) durch das Endgerät an einen zweiten Server (SE2) erlaubt, und
- eine Einrichtung, um eine geänderte Antwort (REPM) zu erzeugen, die den an das Endgerät zu übertragenden geänderten Hyperlink enthält,
**dadurch gekennzeichnet, dass** der geänderte Hyperlink geeignet ist, um nach einer Aktivierung des Hyperlinks im Endgerät (TU) eine Übertragung (E5) durch das Endgerät der spezifischen Anforderung an die zweite Servereinrichtung (SE2) und eine Übertragung (E7) durch das Endgerät einer Anforderung der anderen Seite an den Host-Server herbeizuführen.

5. Endgerät (TU), das über die Verwendung mindestens eines Hyperlinks auf einer Multimediaseite im Endgerät (TU) informieren kann, **dadurch gekennzeichnet, dass** es eine Einrichtung zur Übertragung einer eine Lokalisierungsadresse einer anderen Multimediaseite enthaltenden spezifischen Anforderung (REQS) von einem Host-Server (SH) an eine Servereinrichtung (SE2) abhängig von einem in einem Hyperlink enthaltenen Element nach einer Aktivierung des Hyperlinks im Endgerät enthält, wobei die Aktivierung des Hyperlinks außerdem eine Übertragung einer Anforderung (REQ) der anderen Multimediaseite durch das Endgerät an den Host-Server abhängig von der im Hyperlink enthaltenen Lokalisierungsadresse herbeiführt.

6. Computerprogramm, das in einem Server (SE1) für eine Änderung einer Multimediaseite angewendet werden kann, um die Verwendung mindestens eines Hyperlinks auf der Multimediaseite in einem Endgerät (TU) zu bewerten, wobei der Hyperlink eine Lokalisierungsadresse einer anderen Multimediaseite eines Host-Servers (SH) enthält, wobei das Endgerät mit dem Host-Server über ein Telekommunikationsnetz (RT) in Verbindung steht, wobei das Programm Anweisungen enthält, die, wenn das Programm im Server ausgeführt wird, die folgenden Schritte ausführen:
eine Änderung (E32) mindestens des in einer vom Host-Server nach einer Anforderung (REQ) des Endgeräts übertragenen Antwort (REP) enthaltenen Hyperlinks, wobei der geänderte Hyperlink außer der Lokalisierungsadresse der anderen Seite ein Element enthält, das eine Übertragung (E5) einer die Lokalisierungsadresse der anderen Seite enthaltenden spezifischen Anforderung (REQS) durch das Endgerät an eine zweite Servereinrichtung (SE2) erlaubt, und
eine Erzeugung (E33) einer geänderten Antwort (REPM), die den an das Endgerät zu übertragenden (E34) geänderten Hyperlink enthält,
**dadurch gekennzeichnet, dass** der geänderte Hyperlink geeignet ist, um nach einer Aktivierung des Hyperlinks im Endgerät eine Übertragung (E5) durch das Endgerät der spezifischen Anforderung an die zweite Servereinrichtung (SE2) und eine Übertragung (E7) durch das Endgerät einer Anforderung der anderen Seite an den Host-Server herbeizuführen.

7. Computerprogramm, das in einem Endgerät (TU) für eine Information über die Verwendung mindestens eines Hyperlinks auf einer Multimediaseite in einem Endgerät (TU) angewendet werden kann, wobei das Programm **dadurch gekennzeichnet ist, dass** es Anweisungen enthält, die, wenn das Programm im Endgerät ausgeführt wird, eine Übertragung (E5) einer eine Lokalisierungsadresse einer anderen Multimediaseite eines Host-Servers (SH) enthaltenden spezifischen Anforderung (REQS) durch das Endgerät an eine Servereinrichtung (SE2) abhängig von einem in einem Hyperlink enthaltenen Element nach einer Aktivierung des Hyperlinks im Endgerät durchführen, wobei die Aktivierung des Hyperlinks außerdem eine Übertragung einer Anforderung (REQ) der anderen Multimediaseite durch das Endgerät an den Host-Server abhängig von der im Hyperlink enthaltenen Lokalisierungsadresse herbeiführt.

## Claims

1. Method for modifying a multimedia page in order to assess the use of at least one hyperlink in said multimedia page in a terminal (TU), the hyperlink containing an address for locating another multimedia page of a host server (SH), said terminal communicating with said host server over a telecommunications network (RT), the method comprising in a first server means (SE1) :
- a modification (E32) of at least said hyperlink contained in a response (REP) transmitted by the host server following a request (REQ) from the terminal, the modified hyperlink containing, in addition to the address for locating said other page, an element allowing a transmission (E5) of a specific request (REQS), including the address for locating said other page by the terminal, to a second server means (SE2),
- and a production (E33) of a modified response (REPM) containing the modified hyperlink to be transmitted (E34) to said terminal,
**characterized in that** the modified hyperlink is suitable for, following an activation in the terminal, causing a transmission (E5) by the terminal of said specific request to the second server means (SE2) and a transmission (E7) by the terminal of a request from said other page to said host server.

2. Method according to Claim 1, **characterized in that** said element comprises encoded instructions relative to the hyperlink, the instructions commanding the transmission (E5) of the specific request (REQS) to the second server means (SE2).

3. Method for providing information on the use of at least one hyperlink in a multimedia page in a terminal (TU), **characterized in that** the method for providing information comprises:
a transmission (E5) of a specific request (REQS), including an address for locating another multimedia page from a host server (SH) by the terminal, to a server means (SE2) as a function of an element contained in a hyperlink following an activation of said hyperlink in the terminal, the activation of said hyperlink also causing a transmission of a request (REQ) from the other multimedia page by the terminal to said host server as a function of the location address contained in said hyperlink.

4. Server (SE1) capable of modifying a multimedia page in order to assess the use of at least one hyperlink in said multimedia page in a terminal (TU), said server comprising:
- a means for modifying at least one hyperlink of a multimedia page -contained in a response (REP) transmitted by a host server following a request (REQ) from the terminal, said hyperlink containing an address for locating another multimedia page of the host server (SH), the modified hyperlink containing, in addition to the address for locating said other page, an element allowing a transmission (E5) of a specific request (REQS), including the address for locating said other page by the terminal, to a second server (SE2), and
- a means for producing a modified response (REPM) containing the modified hyperlink to be transmitted to said terminal,
**characterized in that** the modified hyperlink is suitable for, following an activation of said hyperlink in the terminal (TU), causing a transmission (E5) by the terminal of said specific request to the second server means (SE2) and a transmission (E7) by the terminal of a request from said other page to said host server.

5. Terminal (TU) capable of providing information on the use of at least one hyperlink in a multimedia page in said terminal (TU), **characterized in that** it comprises a means for transmitting a specific request (REQS), including an address for locating another multimedia page of a host server (SH), to a server means (SE2) as a function of an element contained in a hyperlink following an activation of said hyperlink in the terminal, the activation of said hyperlink also causing a transmission of a request (REQ) from the other multimedia page by the terminal to said host server as a function of the location address contained in said hyperlink.

6. Computer program capable of being used in a server (SE1) for a modification of a multimedia page in order to assess the use of at least one hyperlink in said multimedia page in a terminal (TU), the hyperlink containing an address for locating another multimedia page of a host server (SH), said terminal communicating with said host server over a telecommunications network (RT), said program comprising instructions which, when the program is executed in said server, carry out the following steps:
a modification (E32) of at least said hyperlink contained in a response (REP) transmitted by the host server following a request (REQ) from the terminal, the modified hyperlink containing, in addition to the address for locating said other page, an element allowing a transmission (E5) of a specific request (REQS), including the address for locating said other page by the terminal, to a second server means (SE2), and
a production (E33) of a modified response (REPM) containing the modified hyperlink to be transmitted (E34) to said terminal,
**characterized in that** the modified hyperlink is suitable for, following an activation of said hyperlink in the terminal, causing a transmission (E5) by the terminal of said specific request to the second server means (SE2) and a transmission (E7) by the terminal of a request from said other page to said host server.

7. Computer program capable of being used in a terminal (TU) for providing information on the use of at least one hyperlink in a multimedia page in a terminal (TU), said program being **characterized in that** it comprises instructions which, when the program is executed in said terminal, carry out a transmission (E5) of a specific request (REQS), including an address for locating another multimedia page of a host server (SH) by the terminal, to a server means (SE2) as function of an element contained in a hyperlink following an activation of said hyperlink in the terminal, the activation of said hyperlink also causing a transmission of a request (REQ) from the other multimedia page by the terminal to said host server as a function of the location address contained in said hyperlink.
